Europäisches Patentamt

European Patent Office

Office européen des brevets

(11) Veröffentlichungsnummer: **0 327 979 B1**

## EUROPÄISCHE PATENTSCHRIFT

(45) Veröffentlichungstag der Patentschrift: **03.11.93**

(51) Int. Cl.5: **C08L 77/00**, C08K 9/08,
//(C08L77/00,77:00,77:00)

(21) Anmeldenummer: **89101851.7**

(22) Anmeldetag: **03.02.89**

Die Akte enthält technische Angaben, die nach
dem Eingang der Anmeldung eingereicht wurden
und die nicht in dieser Patentschrift enthalten sind.

(54) **Schlagzäh modifizierte teilaromatische Copolyamide.**

(30) Priorität: **12.02.88 DE 3804372**

(43) Veröffentlichungstag der Anmeldung:
**16.08.89 Patentblatt 89/33**

(45) Bekanntmachung des Hinweises auf die
Patenterteilung:
**03.11.93 Patentblatt 93/44**

(84) Benannte Vertragsstaaten:
**BE CH DE ES FR GB IT LI NL**

(56) Entgegenhaltungen:
EP-A- 0 279 342
DE-A- 1 961 746
DE-A- 2 552 804

(73) Patentinhaber: **BASF Aktiengesellschaft**
**Carl-Bosch-Strasse 38**
**D-67063 Ludwigshafen(DE)**

(72) Erfinder: **Goetz, Walter, Dr.**
**Jung-Stilling-Strasse 11**
**D-6750 Kaiserslautern(DE)**
Erfinder: **Plachetta, Christoph, Dr.**
**Albert-Einstein-Allee 12**
**D-6703 Limburgerhof(DE)**
Erfinder: **Wolf, Uwe**
**Turnerstrasse 122**
**D-6900 Heidelberg(DE)**
Erfinder: **Blinne, Gerd, Dr.**
**Im Woogtal 7**
**D-6719 Bobenheim(DE)**
Erfinder: **Reimann, Horst, Dr.**
**Adelheidstrasse 26**
**D-6520 Worms 15(DE)**

EP 0 327 979 B1

## Beschreibung

Die Erfindung betrifft thermoplastische Formmassen, enthaltend als wesentliche Komponenten

A) 40 - 95 Gew.% eines teilaromatischen Copolyamids, aufgebaut im wesentlichen aus

$A_1$) 20 - 90 Gew.% Einheiten, die sich von Terephthalsäure und Hexamethylendiamin ableiten,

$A_2$) 0 - 50 Gew.% Einheiten, die sich von $\epsilon$-Caprolactam ableiten und

$A_3$) 0 - 80 Gew.% Einheiten, die sich von Adipinsäure und Hexamethylendiamin ableiten, und

B) 5 - 60 Gew.% faser- oder teilchenförmige Füllstoffe oder deren Mischungen.

Darüber hinaus betrifft die Erfindung die Verwendung derartiger thermoplastischer Formmassen zur Herstellung von Fasern, Folien und Formkörpern und die aus den thermoplastischen Formmassen als wesentlichen Komponenten erhältlichen Formkörper.

Polyamide wie Poly-$\epsilon$-Caprolactam und Polyhexamethylenadipinsäureamidzählen zu den seit langem bekannten technischen Kunststoffen und haben auf vielen Gebieten Anwendung gefunden. Sie zeichnen sich im allgemeinen durch eine große Härte, Steifigkeit und eine gute Wärmeformbeständigkeit aus, sind darüber hinaus widerstandsfähig gegen Abrieb und Verschleiß und auch beständig gegen viele Chemikalien. Die Schlagzähmodifizierung derartiger Polyamide ist ebenfalls bekannt und z.B. in der DE-A- 26 22 973 sowie der US-PS 3 796 771 beschrieben, um nur zwei Beispiele zu nennen.

Für einige Einsatzzwecke wäre es jedoch wünschenswert, wenn die Wärmeformbeständigkeit der Polyamide weiter verbessert werden könnte, ohne die verbleibenden mechanischen Eigenschaften, insbesondere die Schlagzähigkeit, zu beeinträchtigen.

Seit längerer Zeit sind Copolyamide bekannt, in denen ein Teil der aliphatischen Einheiten durch aromatische Einheiten ersetzt sind, z.B. Copolyamide aus Adipinsäure, Terephthalsäure, Hexamethylendiamin und $\epsilon$-Caprolactam in beliebiger Kombination.

So wird in der DE-PS 929 151 ein Verfahren zur Herstellung von hochpolymeren linearen Polyamiden beschrieben, gemäß welchem eine Mischung aus einer aromatischen para-Dicarbonsäure oder einem amidbildenden Derivat derselben, einer äquivalenten Menge eines aliphatischen oder cycloaliphatischen Diamins und anderem polyamidbildendem Ausgangsmaterial wie z.B. einem Lactam unter polyamidbildenden Bedingungen kondensiert wird.

In der GB-PS 1 114 541 werden ternäre Copolyamide beschrieben, die neben einem Hauptteil an Polyhexamethylenadipinamid 20 - 40 Gew.% Einheiten, die sich von Terephthalsäure und Hexamethylendiamin ableiten und 2 - 20 Gew.% einer weiteren Polyamidkomponente enthalten.

In der DE-OS 16 69 455 wird ein Verfahren zur Herstellung von verstreckten Polyamidfäden durch Schmelzspinnen eines Mischpolyamids beschrieben, wobei das Mischpolyamid maximal 40 Gew.% Einheiten enthält, die sich von Terephthalsäure und Hexamethylendiamin ableiten, und die Herstellung dieser Polyamide in Gegenwart von mindestens 3 Mol.% eines monofunktionellen sauren oder basischen Stabilisators durchgeführt wird.

In der DE-OS 16 20 997 werden lineare faserbildende Terpolyamide beschrieben, die Einheiten, die sich von Adipinsäure und Hexamethylendiamin, von Terephthalsäure und Hexamethylendiamin und von Isophthalsäure und Hexamethylendiamin ableiten, enthalten.

In der DE-OS 34 07 492 wird ein Verfahren zur Herstellung von Copolyamiden aus Adipinsäure, Terephthalsäure und Hexamethylendiamin beschrieben, wobei das Copolyamid 25 - 48 Gew.% Einheiten des Hexamethylenterephthalamids enthält und gemäß dem Verfahren eine 40 - 70 %ige wäßrige Lösung der Monomeren in weniger als 15 Minuten auf wenigstens 250°C erhitzt und bis zu einer relativen Viskosität von 1,5 - 2,4 kondensiert wird. Anschließend wird das Wasser in einer oder mehreren Stufen abdestilliert und das entstandene Vorkondensat in bekannter Weise nachkondensiert.

Keine der vorgenannten Schriften enthält nähere Angaben oder Hinweise darauf, wie sich die beschriebenen teilaromatischen Copolyamide bei der Modifizierung mit faser- oder teilchenförmigen Füllstoffen verhalten.

Im Rahmen entsprechender Untersuchungen über die Füllstoffmodifizierung der vorstehend beschriebenen teilaromatischen Copolyamide zeigte es sich, daß die Produkte eine hohe Schmelzviskosität aufwiesen und aus den Massen hergestellte Formkörper nur mit hohem Fülldruck zu verarbeiten waren und viele Gelpartikel und Stippen, d.h. eine schlechte Oberflächenqualität aufwiesen. Darüber hinaus war die Füllstoffverteilung aufgrund der Gelpartikel ungleichmäßig und daher nicht zufriedenstellend.

Aufgabe der vorliegenden Erfindung war es daher, gefüllte thermoplastische Formmassen auf der Basis von teilaromatischen Copolyamiden zur Verfügung zu stellen, die sich bei niedrigerem Fülldruck im Spritzguß zu Formkörpern mit besserer Oberflächenqualität verarbeiten lassen.

Diese Aufgabe wird erfindungsgemäß durch die eingangs definierten thermoplastischen Formmassen gelöst. Bevorzugte Massen dieser Art sind den Unteransprüchen zu entnehmen.

2

Die in den erfindungsgemäßen thermoplastischen Formmassen enthaltenen teilaromatischen Copolyamide A) enthalten als Komponente $A_1$) 20 - 90 Gew.% Einheiten, die sich von Terephthalsäure und Hexamethylendiamin ableiten. Ein geringer Anteil der Terephthalsäure, vorzugsweise nicht mehr als 10 Gew.% der gesamten eingesetzten aromatischen Dicarbonsäuren, kann durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die Copolyamide A) Einheiten, die sich von $\epsilon$-Caprolactam ableiten und/oder Einheiten, die sich von Adipinsäure und Hexamethylendiamin ableiten.

Der Anteil an Einheiten die sich von $\epsilon$-Caprolactam ableiten, beträgt maximal 50 Gew.%, vorzugsweise 20 - 50 Gew.%, insbesondere 25 - 40 Gew.%, während der Anteil an Einheiten die sich von Adipinsäure und Hexamethylendiamin ableiten, bis zu 80 Gew.%, vorzugsweise 30 - 75 Gew.% und insbesondere 35 - 65 Gew.% beträgt.

Die Copolyamide A) können auch sowohl Einheiten von $\epsilon$-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.% beträgt, vorzugsweise mindestens 20 Gew.%. Das Verhältnis der Einheiten, die sich von $\epsilon$-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte $X_1$ bis $X_5$ festgelegten Fünfecks liegt, wobei die Punkte $X_1$ bis $X_5$ folgendermaßen definiert sind:

$X_1$    40 Gew.% Einheiten $A_1$)
     60 Gew.% Einheiten $A_3$)
$X_2$    60 Gew.% Einheiten $A_1$)
     40 Gew.% Einheiten $A_3$)
$X_3$    80 Gew.% Einheiten $A_1$)
     5 Gew.% Einheiten $A_2$)
     15 Gew.% Einheiten $A_3$)
$X_4$    80 Gew.% Einheiten $A_1$)
     20 Gew.% Einheiten $A_2$)
$X_5$    50 Gew.% Einheiten $A_1$)
     50 Gew.% Einheiten $A_2$)

In der Abbildung ist das durch diese Punkte festgelegte Fünfeck in einem Dreistoffdiagramm dargestellt.

Als besonders vorteilhaft für viele Anwendungszwecke haben sich Polyamide mit 50 - 80, insbesondere 60 - 75 Gew.% Einheiten, die sich von Terephthalsäure und Hexamethylendiamin ableiten (Einheiten $A_1$)) und 20 - 50, vorzugsweise 25 - 40 Gew.% Einheiten, die sich von $\epsilon$-Caprolactam ableiten (Einheiten $A_2$)), erwiesen.

Neben den vorstehend beschriebenen Einheiten $A_1$) bis $A_3$) können die teilaromatischen Copolyamide A) noch untergeordnete Mengen, vorzugsweise nicht mehr als 15 Gew.%, insbesondere nicht mehr als 10 Gew.% an weiteren Polyamidbausteinen enthalten, wie sie von anderen Polyamiden bekannt sind. Diese Bausteine können sich von Dicarbonsäuren mit 4 - 16 Kohlenstoffatomen und aliphatischen oder cycloalphatischen Diamine mit 4 - 16 Kohlenstoffatomen sowie von Aminocarbonsäuren bzw. entsprechenden Lactamen mit 7 - 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)-propan oder 3,3'-Dimethyl-4,4'-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Wesentliches Merkmal der teilaromatischen Copolyamide ist, daß ihr Triamingehalt weniger als 0,5, vorzugsweise weniger als 0,3 Gew.% beträgt.

Nach den meisten bekannten Verfahren (vgl. die eingangs erwähnten Druckschriften) hergestellte teilaromatische Copolyamide weisen Triamingehalte auf, die über 0,5 Gew.% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit wie die Produkteigenschaften erheblich.

3

Die Schmelzpunkte der teilaromatischen Copolyamide A) liegen im Bereich von 260°C bis über 300°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und ε-Caprolactam weisen bei Gehalten von etwa 70 Gew.% an Einheiten, die sich von Terephthalsäure und Hexamethylendiamin ableiten, Schmelzpunkte im Bereich von 300°C und (im trockenen Zustand) eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew.% Einheiten aus Terephthalsäure und Hexamethylendiamin (HMD) Schmelzpunkte von 300°C und mehr, wobei die Glastemperatur nicht ganz so hoch liegt wie bei binären Copolyamiden, die anstelle von Adipinsäure bzw. Adipinsäure/HMD ε-Caprolactam enthalten.

Die Herstellung der bevorzugten teilaromatischen Copolyamide mit niedrigem Triamingehalt kann nach den in den EP-A 129 195 und 129 196 beschriebenen Verfahren erfolgen.

Gemäß diesen Verfahren wird eine wäßrige Lösung der Monomeren, d.h. in diesem Fall der Monomeren, die die Einheiten A$_1$) bis A$_3$) bilden, unter erhöhtem Druck unter gleichzeitiger Verdampfung von Wasser und Bildung eines Präpolymeren auf eine Temperatur von 250 - 300°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 - 10 bar und einer Temperatur von 250 - 300°C polykondensiert. Wesentlich ist bei dem Verfahren, daß die wäßrige Salzlösung unter einem Überdruck von 1 - 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.% beträgt.

Durch diese kurzen Verweilzeiten wird die Bildung von Triaminen weitgehend verhindert.

Die verwendeten wäßrigen Lösungen haben in der Regel einen Monomergehalt von 30 - 70 Gew.%, insbesondere von 40 - 65 Gew.%.

Die wäßrige Salzlösung wird vorteilhaft mit einer Temperatur von 50 - 100°C kontinuierlich in eine Verdampferzone geleitet, wo die wäßrige Salzlösung unter einem Überdruck von 1 - 10, vorzugsweise von 2 - 6 bar auf eine Temperatur von 250 - 330°C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 - 55 Sekunden und insbesondere 10 - 40 Sekunden beträgt.

Der Umsatz beim Austritt aus der Verdampferzone beträgt mindestens 93, vorzugsweise 95 - 98 % und der Wassergehalt liegt vorzugsweise im Bereich von 1 - 5, insbesondere 1 - 3 Gew.%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 - 1,7 hat, wird in einer Polymerisationszone geleitet. In der Polymerisationszone wird die anfallende Schmelze bei einer Temperatur von 250 - 330°C, insbesondere 270 - 310°C, und unter einem Überdruck von 1 - 10 bar, insbesondere 2 - 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 - 30 Minuten ein. Das so erhaltene Polyamid, das in der Regel eine relative Viskosität von 1,2 - 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 - 240°C, bis zur gewünschten Viskosität kondensiert. Vorteilhaft verwendet man hierfür den am Kopf der Kolonne anfallenden Wasserdampf.

Die relative Viskosität, gemessen in 1 Gew.% Lösung in 96 Gew.% $H_2SO_4$ bei 23°C, liegt nach der Festphasennachkondensation im allgemeinen im Bereich von 2,2 - 5,0, vorzugsweise von 2,3 - 4,5.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310°C vorteilhaft unter vermindertem Druck, z.B. von 1 - 500 mbar, bis zur gewünschten Viskosität kondensiert. Geeignete Vorrichtungen sind als Finisher bekannt.

Ein weiteres Verfahren, welches dem vorstehend beschriebenen ähnelt, ist in der EP-A 129 196 beschrieben; wegen weiterer Einzelheiten sei auf die Schrift verwiesen.

Als Komponente B) enthalten die erfindungsgemäßen Formmassen 5 bis 60, insbesondere 7 bis 50 und besonders bevorzugt 10 bis 35 Gew.% eines faser- oder teilchenförmigen Füllstoffs oder Mischungen solcher Füllstoffe.

Als faserförmige Füllstoffe seien hier nur beispielsweise Glasfasern, Kohlenstoff-Fasern, Aramid-Fasern, Kaliumtitanatfasern und faserförmige Silikate wie Wollastonit genannt.

Bei der Verwendung von Glasfasern können diese zur besseren Verträglichkeit mit dem Polyamid mit einer Schlichte und einem Haftvermittler ausgerüstet sein.

Im allgemeinen haben die verwendeten Glasfasern einen Durchmesser im Bereich von 6 - 20 $\mu$m. Die Einarbeitung kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 5 mm.

Als teilchenförmige Füllstoffe seien hier nur stellvertretend Glaskugeln, teilchenförmiger Wollastonit, Quarzmehl, Bornitrid, Kaolin, Calciumcarbonat, Magnesiumcarbonat (Kreide) und Titandioxid genannt, wovon Wollastonit, Titandioxid und Kaolin im allgemeinen bevorzugt werden.

Neben den wesentlichen Komponenten A) und B) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten A) bis B).

Übliche Zusatzstoffe sind beispielsweise Stabilisatoren und Oxidationsverzögerer, Flammschutzmittel, Mittel gegen Wärmezersetzung und Zersetzung durch ultraviolettes Licht, Gleit- und Entformungsmittel, Färbemittel, Farbstoffe und Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäurealkylester und -amide sowie Ester des Pentaerythrits mit langkettigen Fettsäuren.

Die erfindungsgemäßen Formmassen können nach an sich bekannten Verfahren hergestellt werden, indem man die Ausgangskomponenten in üblichen Mischvorrichtungen, wie Schneckenextrudern, Brabender-Mühlen oder Banbury-Mühlen mischt und anschließend extrudiert. Nach der Extrusion wird das Extrudat abgekühlt und zerkleinert. Die Mischtemperaturen liegen im allgemeinen im Bereich von 260 bis 350 ° C, vorzugsweise von 280 bis 340 ° C.

Die erfindungsgemäßen schlagzäh modifizierten thermoplastischen Formmassen zeichnen sich gegenüber entsprechenden Formmassen auf der Basis von aliphatischen Polyamiden insbesondere durch eine sehr geringe und gleichmäßige Schwindung aus. Darüber hinaus werden durch die bessere Wärmebeständigkeit der teilaromatischen Copolyamide auch in dieser Hinsicht Vorteile erzielt.

Gegenüber thermoplastische Formmassen auf der Basis von teilaromatischen Copolyamiden mit höherem Triamingehalt ist die deutlich verbesserte Oberflächenqualität der aus den Massen erhältlichen Formkörper vorteilhaft.

Aufgrund ihres ausgewogenen Eigenschaftsspektrums eignen sich die erfindungsgemäßen Formmassen insbesondere zur Herstellung von Fasern, Folien und Formkörpern, insbesondere für Gehäuseteile.

Beispiele

Es wurden folgende Komponenten eingesetzt:

Komponente A

A/1: Co-Polyamid aus 30 Gew.% Einheiten, die sich von $\epsilon$-Caprolactam und 70 Gew.% Einheiten, die sich von Terephthalsäure und Hexamethylendiamin ableiten

Eine wäßrige Lösung, bestehend aus 35 kg $\epsilon$-Caprolactam, 55 kg Terephthalsäure, 38,5 kg Hexamethylendiamin und 128,5 kg Wasser wurde aus einem beheizten Vorratsbehälter bei ca. 80 ° C mit einer Geschwindigkeit entsprechend einer Polyamidmenge von 5 kg/Stunde mittels einer Dosierpumpe in eine teilweise horizontal, teilweise vertikal angeordneten Röhrenverdampfer befördert. Der Verdampfer war mit einem flüssigen Wärmeträger, der eine Temperatur von 295 ° C hatte, bei kräftiger Umwälzung beheizt. Der Verdampfer hatte eine Länge von 3 m und einen Inhalt von 180 ml und eine wärmeübertragende Oberfläche von etwa 1300 cm$^2$. Die Verweilzeit im Verdampfer betrug 50 sec. Das aus dem Verdampfer austretende Gemisch aus Präpolymeren und Wasserdampf hatte eine Temperatur von 290 ° C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 l Brüdenkondensat pro Stunde zur Erzeugung von Rücklauf aufgegeben wurden. Am Kolonnenkopf stellte sich eine Temperatur von 152 ° C ein. Der nach dem Entspannungsventil austretende Wasserdampf wurde kondensiert und hatte einen Gehalt an Hexamethylendiamin von weniger als 0,05 Gew.% und einen Gehalt an $\epsilon$-Caprolactam von weniger als 0,1 Gew.%. Als Kolonnensumpf erhielt man eine wäßrige Lösung von Hexamethylendiamin, die 80 Gew.% Hexamethylendiamin und 1 bis 3 % $\epsilon$-Caprolactam, jeweils bezogen auf erzeugtes Polyamid enthielt. Diese Lösung wurde über eine Pumpe wieder vor dem Eintritt in den Verdampfer der Ausgangssalzlösung zugegeben.

Nach dem Verdampfer hatte das Präpolymere eine relative Viskosität von 1,25, gemessen in 98 gew.%iger Schwefelsäure bei 20 ° C und wies nach der Endgruppenanalyse einen Umsatz von 93 bis 95 % auf. Der Gehalt an Bis-hexamethylentriamin betrug 0,1 bis 0,15 Gew.%, bezogen auf Polyamid.

Nach Austritt der Polymerschmelze aus dem Abscheider hatte das Polyamid eine sehr helle Eigenfarbe und einen äußerst niedrigen Gehalt an Bis-hexamethylentriamin von 0,11 Gew.% sowie eine relative Viskosität von 1,65 bis 1,80.

Das Produkt wies in etwa eine Äquivalenz von Carboxyl- und Aminoendgruppen auf.

Der Gehalt an extrahierbaren Anteilen (Extraktion mit Methanol) betrug 3,1 bis 3,3 Gew.%.

Im Austragsextruder wurde die Schmelze dann auf Normaldruck entspannt und bei einer Verweilzeit von weniger als 1 Minute praktisch nicht mehr weiter kondensiert. Das erhaltene Granulat wurde durch kontinuierliche Festphasenkondensation mit überhitztem Wasserdampf bei 195 ° C und einer Verweilzeit von 30 Stunden auf einen K-Wert nach Fikentscher (19/100 ml 96 % $H_2SO_4$) von 67 kondensiert. Der Gehalt an extrahierbaren Anteilen betrug 0,2 Gew.% (Methanolextrakt).

A/2: Teilaromatisches Copolyamid mit 40 Gew.% Einheiten aus Terephthalsäure und Hexamethylendiamin und 65 Gew.% Einheiten aus Adipinsäure und Hexamethylendiamin

Eine Salzlösung, bestehend aus 58,6 kg eines Salzes aus Adipinsäure und Hexamethylendiamin, 26,1 kg Terephthalsäure, 18,6 kg Hexamethylendiamin und 114 kg Wasser mit einer Temperatur von etwa 80°C wurde von oben in einen vertikal angeordneten Verdampfer von 2 m Länge, einem Inhalt von 120 cm$^3$ und einer wärmeübertragenden Fläche von etwa 860 cm$^2$ eingeleitet. Der Verdampfer wurde mit einem kräftig umgewälzten flüssigen Wärmeträger mit einer Temperatur von 295°C beheizt. Das aus dem Verdampfer austretende Gemisch aus Präpolymeren und Wasserdampf hatte eine Temperatur von 288°C.

Der Umsetzungsgrad betrug 94 % und die Verweilzeit im Verdampfer etwa 40 sec.

Das so erhaltene Gemisch aus Präpolymeren und Wasserdampf wurde in eine Stoffaustauschzone geleitet, die mit Füllkörpern bestückt war und eine Oberfläche von 2 m$^2$ hatte. Die Stoffaustauschzone war so ausgebildet, daß keine nennenswerten Wärmeumsätze stattfanden und die Schmelze des Präpolymeren mit dem Wasserdampf innig in Berührung gebracht wurde. Die Verweilzeit in der Stoffaustauschzone betrug 0,5 Minute.

Nach Passieren der Stoffaustauschzone wurde das Gemisch aus Präpolymeren und Dampf analog der Verfahrensweise im Beispiel 1 im Abscheider getrennt. Auch der weitere Verfahrensablauf entsprach der Arbeitsweise gemäß Beispiel 1.

Das so erhaltene Polyamid hatte einen Gehalt an Bis-hexamethylentriamin von 0,08 Gew.%. Der Anteil an Hexamethylendiamin im Kolonnensumpf betrug nur noch 1 bis 2 Gew.%, bezogen auf Polyamid.

Der Gehalt an extrahierbaren Bestandteilen (Methanolextrakt) betrug 0,2 bis 0,3 Gew.%.

Der K-Wert nach Fikentscher (1 g/100 ml in 96 % H$_2$SO$_4$ bei 25°C) nach der Festphasennachkondensation betrug 67.

A/V$_1$:     Teilaromatisches Copolyamid mit einer Zusammensetzung wie A/1, aber einem Triamingehalt von 0,62 Gew.%.

A/V$_2$:     Teilaromatisches Copolyamid mit einer Zusammensetzung wie A/2, aber einem Triamingehalt von 0,57 Gew.%.

B/1:     Glasfasern (Gevetex® 5129)

B/2:     Wollastonit (Wicroll® 10)

Die Komponenten A und B wurden in den in der Tabelle angegebenen Gewichtsverhältnissen gemischt und bei einer Massetemperatur von 320°C das Polyamid aufgeschmolzen. Anschließend wurden auf einer Spritzgußmaschine des Typs BSKM 400 Testkästchen (in Anlehnung an BASF-Kunststoffe "Ultramid®", Ausgabe 6/1985, Abbildung 7, Seite 14) hergestellt.

Die Massetemperatur betrug 320°C, die Werkzeugoberflächentemperatur 80°C.

Bestimmt wurden der erforderliche Spritz- und Fülldruck sowie die Anzahl der Stippen pro Testkästchen (in der Tabelle sind die Mittelwerte aus jeweils 5 Messungen angegeben).

Außerdem wurde die Oberfläche visuell beurteilt.

Die Ergebnisse der Messungen sind ebenfalls der Tabelle zu entnehmen.

Die Ergebnisse zeigen die deutlich verbesserten Verarbeitungseigenschaften der erfindungsgemäßen Formmassen.

| Beispiel | 1 | 2V* | 3 | 4V* | 5 | 6V* | 7 | 8V* |
|---|---|---|---|---|---|---|---|---|
| Polyamid (Gew.%) | 60A/1 | 60A/V1 | 60A/2 | 60A/V2 | 70A/1 | 70A/V1 | 70A/2 | 70A/V2 |
| Füllstoff (Gew.%) | 40B/1 | 40B/1 | 40B/1 | 40B/1 | 30B/2 | 30BB2 | 30B/2 | 30B/2 |
| Fülldruck (bar) | 575 | 695 | 465 | 670 | 533 | 610 | 445 | 582 |
| Spritzdruck (bar) | 845 | 920 | 815 | 905 | 805 | 880 | 800 | 860 |
| Oberfläche | glatt glänzend | Ausschwemmungen, ungleiche Oberfläche | glatt glänzend | Ausschwemmungen, matte Oberfläche | glatt glänzend | Ausschwemmungen matte Oberfläche | glatt glänzend | Ausschwemmungen |
| Zahl der Stippen pro Testkästchen | 0 | 12 | 0 | 21 | 0 | 16 | 0 | 33 |

V* = Vergleichsversuche

## Patentansprüche

1. Thermoplastische Formmassen, enthaltend als wesentliche Komponenten

   A) 40 - 95 Gew.% eines teilaromatischen Copolyamids mit einem Triamingehalt von unter 0,5 Gew.%, aufgebaut im wesentlichen aus

EP 0 327 979 B1

(A$_1$) 20 - 90 Gew.% Einheiten, die sich von Terephthalsäure und Hexamethylendiamin ableiten,

A$_2$) 0 - 50 Gew.% Einheiten, die sich von $\epsilon$-Caprolactam ableiten und

A$_3$) 0 - 80 Gew.% Einheiten, die sich von Adipinsäure und Hexamethylendiamin ableiten, und

B) 5 - 60 Gew.% faser- oder teilchenförmige Füllstoffe oder deren Mischungen.

2. Thermoplastische Formmassen nach Anspruch 1, dadurch gekennzeichnet, daß die Zusammensetzung der teilaromatischen Copolyamide A) im Dreistoffdiagramm innerhalb des durch die Eckpunkte X$_1$ bis X$_5$ definierten Fünfecks liegt:

X$_1$    40 Gew.% Einheiten A$_1$)
          60 Gew.% Einheiten A$_3$)
X$_2$    60 Gew.% Einheiten A$_1$)
          40 Gew.% Einheiten A$_3$)
X$_3$    80 Gew.% Einheiten A$_1$)
          5 Gew.% Einheiten A$_2$)
          15 Gew.% Einheiten A$_3$) X$_4$ 80 Gew.% Einheiten A$_1$)
          20 Gew.% Einheiten A$_2$)
X$_5$    50 Gew.% Einheiten A$_1$)
          50 Gew.% Einheiten A$_2$)

3. Thermoplastische Formmassen nach mindestens einem der Ansprüche 1 und 2, dadurch gekennzeichnet, daß die teilaromatischen Copolyamide

A$_1$)    50 - 80 Gew.% Einheiten, die sich von Terephthalsäure und Hexamethylendiamin ableiten, und

A$_2$)    20 - 50 Gew.% Einheiten, die sich von $\epsilon$-Caprolactam ableiten, enthalten.

4. Thermoplastische Formmassen nach Anspruch 3, dadurch gekennzeichnet, daß die teilaromatischen Copolyamide A)

A$_1$)    60 - 75 Gew.% Einheiten, die sich von Terephthalsäure und Hexamethylendiamin ableiten, und

A$_2$)    25 - 40 Gew.% Einheiten, die sich von $\epsilon$-Caprolactam ableiten, enthalten.

5. Thermoplastische Formmassen nach mindestens einem der Ansprüche 1 bis 4, dadurch gekennzeichnet, daß sie 10 - 50 Gew.% an faser- oder teilchenförmigen Füllstoffen C) enthalten.

6. Verwendung der thermoplastischen Formmassen gemäß mindestens einem der Ansprüche 1 bis 5 zur Herstellung von Folien, Fasern und Formkörpern.

7. Formkörper, erhältlich aus teilaromatischen Copolyamiden gemäß mindestens einem der Ansprüche 1 bis 5 als wesentlichen Komponenten.

**Claims**

1. A thermoplastic molding material containing, as essential components,

A) 40-95% by weight of a partly aromatic copolyamide having a triamine content of less than 0.5% by weight, essentially consisting of

A$_1$) 20-90% by weight of units derived from terephthalic acid and hexamethylenediamine,

A$_2$) 0-50% by weight of units derived from $\epsilon$-caprolactam and

A$_3$) 0-80% by weight of units derived from adipic acid and hexamethylenediamine, and

B) 5-60% by weight of fibrous or particulate fillers or mixtures of these.

2. A thermoplastic molding material as claimed in claim 1, wherein the composition of the partly aromatic copolyamides A) lies within the pentagon defined by the apices X$_1$ to X$_5$ in the ternary diagram:

X$_1$    40% by weight of units A$_1$)
          60% by weight of units A$_3$)
X$_2$    60% by weight of units A$_1$)
          40% by weight of units A$_3$)
X$_3$    80% by weight of units A$_1$)
          5% by weight of units A$_2$)

15% by weight of units A$_3$)

X$_4$      80% by weight of units A$_1$)

20% by weight of units A$_2$)

X$_5$      50% by weight of units A$_1$)

50% by weight of units A$_2$).

3. A thermoplastic molding material as claimed in at least one of claims 1 and 2, wherein the partly aromatic copolyamides contain

A$_1$)      50-80% by weight of units derived from terephthalic acid and hexamethylenediamine and

A$_2$)      20-50% by weight of units derived from $\epsilon$-caprolactam.

4. A thermoplastic molding material as claimed in claim 3, wherein the partly aromatic copolyamides A) contain

A$_1$)      60-75% by weight of units derived from terephthalic acid and hexamethylenediamine and

A$_2$)      25-40% by weight of units derived from $\epsilon$-caprolactam.

5. A thermoplastic molding material as claimed in at least one of claims 1 to 4, which contains 10-50% by weight of fibrous or particulate filters C).

6. Use of a thermoplastic molding material as claimed in at least one of claims 1 to 5 for producing films, fibers and moldings.

7. A molding obtainable from a partly aromatic copolyamide as claimed in at least one of claims 1 to 5, as an essential component.

**Revendications**

1. Masses à mouler thermoplastiques, contenant comme composants essentiels

A) 40 - 95% en poids d'un copolyamide partiellement aromatique, ayant une teneur en triamine inférieure à 0,5% en poids, composé essentiellement

A$_1$) de 20 - 90% en poids de motifs qui dérivent d'acide téréphtalique et d'hexaméthylènediamine,

A$_2$) de 0 - 50% en poids de motifs qui dérivent d'$\epsilon$-caprolactame et

A$_3$) de 0 - 80% en poids de motifs qui dérivent d'acide adipique et d'hexaméthylénediamine, et

B) 5 - 60% en poids de charges fibreuses ou particulaires ou de mélanges de celles-ci.

2. Masses à mouler thermoplastiques selon la revendication 1, caractérisées en ce que la composition des copolyamides partiellement aromatiques A) se situe, dans le diagramme ternaire, dans les limites du pentagone défini par les sommets X$_1$ à X$_5$:

X$_1$      40% en poids de motifs A$_1$)

60% en poids de motifs A$_3$)

X$_2$      60% en poids de motifs A$_1$)

40% en poids de motifs A$_3$)

X$_3$      80% en poids de motifs A$_1$)

5% en poids de motifs A$_2$)

15% en poids de motifs A$_3$)

X$_4$      80% en poids de motifs A$_1$)

20% en poids de motifs A$_2$)

X$_5$      50% en poids de motifs A$_1$)

50% en poids de motifs A$_2$).

3. Masses à mouler thermoplastiques selon l'une au moins des revendications 1 et 2, caractérisées en ce que les copolyamides partiellement aromatiques contiennent

A$_1$)      50 - 80% en poids de motifs qui dérivent d'acide téréphtalique et d'hexaméthylènediamine et

A$_2$)      20 - 50% en poids de motifs qui dérivent d'$\epsilon$-caprolactame.

**4.** Masses à mouler thermoplastiques selon la revendication 3, caractérisées en ce que les copolyamides partiellement aromatiques A) contiennent

$A_1$) 60 - 75% en poids de motifs qui dérivent d'acide téréphtalique et d'hexaméthylènediamine et

$A_2$) 25 - 40% en poids de motifs qui dérivent d'$\epsilon$-caprolactame.

**5.** Masses à mouler thermoplastiques selon l'une au moins des revendications 1 à 4, caractérisées en ce qu'elles contiennent 10 à 50% en poids de charges fibreuses ou particulaires C).

**6.** Utilisation des masses à mouler thermoplastiques selon l'une au moins des revendications 1 à 5 pour la fabrication de feuilles, de fibres et de corps moulés.

**7.** Corps moulés, obtenus à partir de copolyamides partiellement aromatiques selon l'une au moins des revendications 1 a 5 en tant que composants essentiels.